# EUROPEAN PATENT APPLICATION

(11) **EP 1 093 057 A1**
(43) Date of publication of application: **18.04.2001**
(21) Application number: 00913039.4
(22) Date of filing: 31.03.2000
(51) Int. Cl.: G06F 13/00, G06F 3/00

(54) **DEVICE SEARCHER AND ITS METHOD, AND RECORDING MEDIUM ON WHICH COMPUTER PROGRAM FOR REALIZING IT IS RECORDED**

(30) Priority: 31.03.1999 JP 9119699
(71) Applicant: Seiko Epson Corporation, Shinjuku-ku, Tokyo 163-0811 (JP)
(72) Inventor: NAGASAKA, Fumio, Seiko Epson Corp., Suwa-shi, Nagano 392-8502 (JP); HISAMATSU, Yutaka, Seiko Epson Corp, Suwa-shi, Nagano 392-8502 (JP); KATADA, Toshiharu, Seiko Epson Corp, Suwa-shi, Nagano 392-8502 (JP)
(74) Representative: Winter, Brandl, Fürniss, Hübner, Röss, Kaiser, Polte Partnerschaft
(86) International application number: JP0002095
(87) International publication number: WO0058841

(57) **Abstract**

An application unit 112 in a CPU 110 causes a Device Retrieval window to be displayed on a screen of a monitor 180 (S100). The user inputs the name of a person of interest in a name input box in the Device Retrieval window and clicks a Retrieval button. The application unit 112 detects the click, gains access to a server 400, and obtains names of devices mapped to the name of the person of interest input in the name input box from pieces of information registered in a common database 410 in the server 400 (S106). The application unit 112 then causes the obtained names of the respective devices and icons corresponding to the names of the devices to be displayed on the screen (S108).

## Description

### Technical Field

The present invention relates to a technique that retrieves a device mapped to a desired person among a plurality of devices present on a network.

### Background Art

The known operating systems Windows 95 and Windows NT manufactured by Microsoft Corporation have the function of retrieving a specific computer present on a network by using the name of the computer as the condition of retrieval and the function of retrieving a file or a folder stored in a specific computer present on the network by using the file name or the folder name as the condition of retrieval. Another operating system Windows 98 also manufactured by Microsoft Corporation has the function of retrieving a mail address of a specific person by using the name of the person as the condition of retrieval.

A plurality of computers are generally connected to the network, and a diversity of devices, such as printers, scanners, and facsimiles, are also connected to the network directly or via the computers. These devices have some relations to individuals, for example, possessed or used by a certain person, located near to a certain person, or installed on a floor or in a section where a certain person belongs to.

In the case where the user desires to send any document or image of interest to a certain person who utilizes a network, it is very convenient for the user to retrieve a device mapped to the certain person among all the devices present on the network by using the certain person as the condition of retrieval. The user then simply transfers data of the document or image to the retrieved device to send the certain person the document or image of interest.

The prior art technique, however, only has the function of retrieving the specific computer present on the network or the function of retrieving the mail, address of a certain person by using the name of the certain person as the condition of retrieval as described above.

The object of the present invention is thus to solve the problems of the prior art technique and to provide a device retrieving apparatus that enables a device mapped to a desired person to be retrieved among a plurality of devices present on a network, as well as a corresponding method and a recording medium to attain the method.

### Disclosure of the Invention

At least part of the above and the other related objects is attained by a first device retrieving apparatus that retrieves a device mapped to a desired person among a plurality of devices present on a network. The first device retrieving apparatus includes: a display unit having a screen; an input unit that is used to externally input an instruction; and a control unit. When an individual description of the desired person is externally input as a specific individual description via the input unit, the control unit gains access to a database that is present on the network or in the device retrieving apparatus, obtains a device description mapped to the input specific individual description out of mapping information, which is stored in the database and regards mapping of a plurality of individual descriptions to device descriptions of the plurality of devices present on the network, and causes at least either one of the obtained device description and a device symbol representing a device expressed by the obtained device description to be displayed on the screen of the display unit.

The present invention is also directed to a corresponding first method of retrieving a device mapped to a desired person among a plurality of devices present on a network and displaying a result of retrieval on a screen of a display unit. The first method includes the steps of:
(a) specifying an individual description of the desired person;
(b) obtaining a device description mapped to the specified individual description out of mapping information, which is provided in advance and regards mapping of a plurality of individual descriptions to device descriptions expressing the plurality of devices present on the network; and
(c) causing at least one of the obtained device description and a device symbol representing a device expressed by the obtained device description to be displayed on the screen of the display unit.

In the first device retrieving apparatus and the corresponding first method, by simply specifying the individual description of a desired person as the condition of retrieval, a device description mapped to the individual description or a device symbol corresponding to the device description is displayed on the screen. This arrangement enables the user to readily retrieve a device related to the desired person on the network. When the user wants to transfer a predetermined document or image to the desired person, this arrangement enables the user to immediately specify the device related to the desired person and start transferring data of the predetermined document or image to the specified device.

In the specification hereof, the mapping of A to B includes not only the direct mapping of A to B but the indirect mapping of A to B (for example, A is mapped to B via C that is related to both A and B).

In the specification hereof, the devices represent not only physical devices, such as printers, digital cameras, scanners, and facsimiles, but part of the functions attained by the physical devices and software that attains the functions equivalent to those of the physical devices (for example, electronic mail and image processing).

In the specification hereof, the individual descriptions and the device descriptions include the names of the individuals and devices as well as any other descriptions used to identify the individuals and devices, such as identification numbers and codes. The device symbols include icons that are pictorial representations of devices as well as any other user-recognizable representations that can be displayed on the screen, such as letters or characters, figures, symbols, codes, and colors corresponding to the devices. These are also applicable to individual symbols and data symbols discussed later. In the case of the individual symbols, a photograph or an illustration of an individual may be used for the pictorial representation of the individual.

The present invention is further directed to a second device retrieving apparatus that retrieves a device mapped to a desired person among a plurality of devices present on a network. The second device retrieving apparatus includes: a display unit having a screen; an input unit that is used to externally input an instruction; and a control unit. The control unit causes individual symbols corresponding to individuals to be displayed on the screen of the display unit. When an instruction is given externally via the input unit to select a specific individual symbol corresponding to the desired person among the individual symbols displayed on the screen, the control unit specifies an individual description of the desired person corresponding to the selected specific individual symbol as a specific individual description, gains access to a database that is present on the network or in the device retrieving apparatus, obtains a device description mapped to the specific individual description out of mapping information, which is stored in the database and regards mapping of a plurality of individual descriptions to device descriptions expressing the plurality of devices present on the network, and causes at least one of the obtained device description and a device symbol representing a device expressed by the obtained device description to be displayed on the screen of the display unit.

The present invention is also directed to a corresponding second method of retrieving a device mapped to a desired person among a plurality of devices present on a network and displaying a result of retrieval on a screen of a display unit. The second method includes the steps of:
(a) causing individual symbols corresponding to individuals to be displayed on the screen of the display unit;
(b) selecting a specific individual symbol corresponding to the desired person among the individual symbols displayed;
(c) obtaining a device description mapped to an individual description of the desired person corresponding to the selected specific individual symbol out of mapping information, which is provided in advance and regards mapping of a plurality of individual descriptions to device descriptions expressing the plurality of devices present on the network; and
(d) causing at least one of the obtained device description and a device symbol representing a device expressed by the obtained device description to be displayed on the screen of the display unit.

In the second device retrieving apparatus and the corresponding second method, by simply selecting the specific individual symbol representing a desired person among the individual symbols displayed on the screen, a device description mapped to the individual description corresponding to the specific individual symbol or a device symbol corresponding to the device description is displayed on the screen. This arrangement enables the user to readily retrieve a device related to the desired person on the network. Since the device retrieval is implemented simply by selecting one of the individual symbols displayed on the screen, this arrangement enhances the operatability of the user.

The present invention is further directed to a third device retrieving apparatus that retrieves a device mapped to a desired person among a plurality of devices present on a network. The third device retrieving apparatus includes: a display unit having a screen; an input unit that is used to externally input an instruction; and a control unit. The control unit causes individual symbols corresponding to individuals and device symbols corresponding to devices to be displayed on the screen of the display unit. When an instruction is given externally via the input unit to map a desired first device symbol among the device symbols displayed on the screen to a specific individual symbol corresponding to the desired person, the control unit specifies an individual description of the desired person corresponding to the mapped individual symbol as a specific individual description, gains access to a database that is present on the network or in the device retrieving apparatus, obtains a device description mapped to the specific individual description out of mapping information, which is stored in the database and regards mapping of a plurality of individual descriptions to device descriptions expressing the plurality of devices present on the network, and causes at least one of the obtained device description and a second device symbol representing a device expressed by the obtained device description to be displayed on the screen of the display unit.

The present invention is also directed to a corresponding third method of retrieving a device mapped to a desired person among a plurality of devices present on a network and displaying a result of retrieval on a screen of a display unit. The third method includes the steps of:
(a) causing individual symbols corresponding to individuals and device symbols corresponding to devices to be displayed on the screen of the display unit;
(b) mapping a desired device symbol among the device symbols displayed to a specific individual symbol corresponding to the desired person;
(c) obtaining a device description mapped to an individual description of the desired person corresponding to the mapped specific individual symbol out of mapping information, which is provided in advance and regards mapping of a plurality of individual descriptions to device descriptions expressing the plurality of devices present on the network; and
(d) causing at least one of the obtained device description and a device symbol representing a device expressed by the obtained device description to be displayed on the screen of the display unit.

In the third device retrieving apparatus and the corresponding third method, by simply mapping a desired device symbol among those displayed on the screen to the specific individual symbol representing a desired person, a device description mapped to the individual description corresponding to the specific individual symbol or a device symbol corresponding to the device description is displayed on the screen. This arrangement enables the user to readily retrieve a device related to the desired person on the network. Since the device retrieval is implemented simply by mapping a desired device symbol among those displayed on the screen to the specific individual symbol, this arrangement enhances the operatability of the user.

In accordance with one preferable application of the third device retrieving apparatus of the present invention, in the case where a device represented by the first device symbol keeps data, the control unit causes data symbols representing respective data kept in the device to be displayed in a specific area on the screen of said display unit, which is different from an area in which at least one of the obtained device description and the corresponding second device symbol is displayed.

When the device symbol representing a selected device is mapped to the specific individual symbol, this arrangement enables data symbols representing data kept in the selected device expressed by the mapped device symbol to be displayed simultaneously with a device symbol related to the desired person. The user can thus check the data kept in the selected device. When the user wants to transfer any of the data kept in the selected device to the desired person, this arrangement enables the user to immediately find a device related to the desired person and give an instruction to start transfer of the selected data by simply mapping the selected data symbol to the device symbol related to the desired person, for example, through operations of a mouse.

In any of the first through the third device retrieving apparatuses of the present invention, the mapping information may include individual positions-related information with regard to mapping of positions related to individuals to the individual descriptions and device positions-related information with regard to mapping of positions related to devices to the device descriptions. In this arrangement, the control unit specifies a position mapped to the specific individual description from the individual positions-related information, reads a device description mapped to the specified position out of the device positions-related information, and obtains the read-out device description as the device description mapped to the specific individual description.

A person generally utilizes devices located near to the person. This arrangement maps a desired person to an available device based on the positional relationship between the person and the device, for example, the location of the person and the position of the device.

The present invention is also actualized by a first computer readable recording medium in which a specific computer program is recorded. The specific computer program is used to retrieve a device mapped to a desired person among a plurality of devices present on a network and display a result of retrieval on a screen of a display unit connecting with a computer. The specific computer program causes the computer to attain the functions of: when an individual description of the desired person is externally input into the computer, obtaining a device description mapped to the input individual description out of mapping information, which is provided in advance and regards mapping of a plurality of individual descriptions to device descriptions expressing the plurality of devices present on the network; and causing at least one of the obtained device description and a device symbol representing a device expressed by the obtained device description to be displayed on the screen of the display unit.

The computer executes the specific computer program recorded in the first recording medium to attain the functions equivalent to those of the control unit in the first device retrieving apparatus discussed above and thereby ensure the same effects as those of the first device retrieving apparatus.

The present invention is further actualized by a second computer readable recording medium in which a specific computer program is recorded. The specific computer program is used to retrieve a device mapped to a desired person among a plurality of devices present on a network and display a result of retrieval on a screen of a display unit connecting with a computer. The specific computer program causes the computer to attain the functions of: causing individual symbols corresponding to individuals to be displayed on the screen of the display unit; when an instruction is given externally to the computer to select a specific individual symbol corresponding to the desired person among the individual symbols displayed on the screen, obtaining a device description mapped to an individual description of the desired person corresponding to the selected specific individual symbol out of mapping information, which is provided in advance and regards mapping of a plurality of individual descriptions to device descriptions expressing the plurality of devices present on the network; and causing at least one of the obtained device description and a device symbol representing a device expressed by the obtained device description to be displayed on the screen of the display unit.

The computer executes the specific computer program recorded in the second recording medium to attain the functions equivalent to those of the control unit in the second device retrieving apparatus discussed above and thereby ensure the same effects as those of the second device retrieving apparatus.

The present invention is also actualized by a third computer readable recording medium in which a specific computer program is recorded. The specific computer program is used to retrieve a device mapped to a desired person among a plurality of devices present on a network and display a result of retrieval on a screen of a display unit connecting with a computer. The specific computer program causes the computer to attain the functions of: causing individual symbols corresponding to individuals and device symbols corresponding to devices to be displayed on the screen of the display unit; when an instruction is given externally to the computer to map a desired device symbol among the device symbols displayed on the screen to a specific individual symbol corresponding to the desired person, obtaining a device description mapped to an individual description of the desired person corresponding to the mapped specific individual symbol out of mapping information, which is provided in advance and regards mapping of a plurality of individual descriptions to device descriptions expressing the plurality of devices present on the network; and causing at least one of the obtained device description and a device symbol representing a device expressed by the obtained device description to be displayed on the screen of the display unit.

The computer executes the specific computer program recorded in the third recording medium to attain the functions equivalent to those of the control unit in the third device retrieving apparatus discussed above and thereby ensure the same effects as those of the third device retrieving apparatus.

The technique of the present invention is actualized by a diversity of applications, which include device retrieving apparatuses, device retrieving methods, computer programs to attain the functions of the device retrieving apparatuses or the device retrieving methods, recording media in which such computer programs are recorded, and data signals that are embodied in carrier waves and include such computer programs.

### Brief Description of the Drawings

Fig. 1 is a block diagram illustrating a device retrieving apparatus in one embodiment of the present invention;
Fig. 2 is a flowchart showing a first device retrieval and display process routine executed by the application unit 112 of Fig. 1;
Fig. 3 shows a Device Retrieval window displayed on the screen of the monitor 180 of Fig. 1;
Fig. 4 shows an example of information with regard to devices registered in the common database 410 of Fig. 1;
Fig. 5 shows an example of information with regard to individuals registered in the common database 410 of Fig. 1;
Fig. 6 is a flowchart showing a second device retrieval and display process routine executed by the application unit 112 of Fig. 1;
Fig. 7 shows individual icons displayed on the screen of the monitor 180 of Fig. 1;
Fig. 8 is a flowchart showing a third device retrieval and display process routine executed by the application unit 112 of Fig. 1;
Fig. 9 shows individual icons displayed on the screen of the monitor 180 of Fig. 1;
Fig. 10 is a block diagram showing a series of processing executed by the application unit 112 of Fig. 1 to access a device and obtain data via the network 500; and
Fig. 11 shows an example of places-related information stored in the common database 410 of Fig. 1.

### Best Modes of Carrying Out the Invention

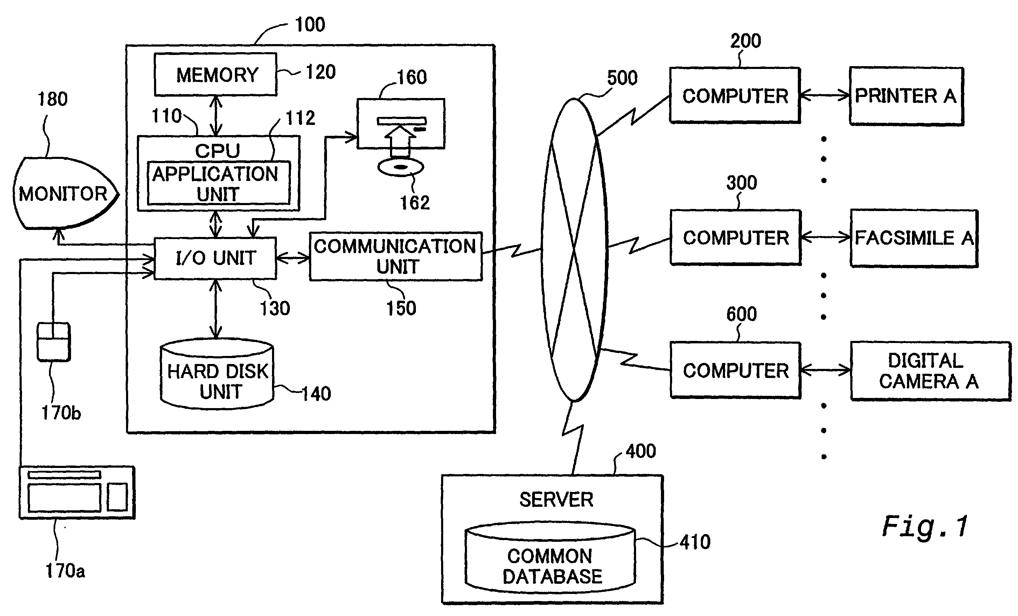

One mode of carrying out the present invention is described below as a preferred embodiment. Fig. 1 is a block diagram illustrating a device retrieving apparatus in one embodiment of the present invention.

A computer 100 functioning as the device retrieving apparatus of this embodiment is connected with a computer 200 to which Printer A is connected, a computer 300 to which Facsimile A is connected, a computer 600 to which Digital Camera A is connected, and a server 400 having a common database 410 via a network 500 as shown in Fig. 1. The computer may be any of various computers including personal computers, mobile computers, information processing terminals, and work stations, peripheral equipment like copying machines and printers substantially having the functions of the computer, and set top boxes (one type of information terminals including a Web TV terminal receiver as a typical example) having the functions of the computer. Any of a diversity of networks, for example, the Internet, an intranet, a local area network (LAN), and a wide area network (WAN), is applicable for the network 500.

As illustrated in Fig. 1, the computer 100 includes a CPU 110 that carries out a variety of processes and controls according to computer programs, a memory 120 that stores the compute programs therein and temporarily registers therein data obtained in the course of processing, an I/O unit 130 that carries out data transmission to and from a diversity of peripheral devices, a hard disk unit 140 that stores a diversity of data therein, a communication device 150 that may be a modem, a terminal adaptor, or a network card and carries out communications with other devices via the network, a CD-ROM drive 160, a keyboard 170a and a mouse 170b that are used to input, for example, user's instructions, and a monitor 180 that may be a CRT or a liquid-crystal display and displays a variety of images like a user interface.

The CPU 110 incorporated in the computer 100 reads a desired computer program from the memory 120 and executes the desired computer program to function as an application unit 112.

In this embodiment, the computer program stored in the memory 120 is read from a CD-ROM 162 as a recording medium by the CD-ROM drive 160 and taken into the computer 100. The input computer program is transferred to the hard disk unit 140 and further to the memory 120, for example, at the time of activation. The input computer program may alternatively be transferred to the memory 120 not via the hard disk unit 140 but directly.

In this embodiment, the CD-ROM is used as the recording medium, in which the computer program is recorded in a computer readable manner. Other examples applicable for such a recording medium include flexible disks, magneto-optic discs, IC cards, ROM cartridges, punched cards, prints with barcodes or other codes printed thereon, internal storage devices (memories like a RAM and a ROM) and external storage devices of the computer, and a variety of other computer readable media.

Instead of being recorded in such a recording medium, the computer program may be taken into the computer 100 from a program server (not shown) for supplying computer programs accessed via the network 500.

Part of the computer program may be attained by the operating system.

The application unit 112 attained by the software in this embodiment may alternatively be actualized by a hardware configuration.

Many pieces of information regarding a large number of devices (for example, Printer A, Facsimile A, and Digital Camera A) present on the network 500 are registered in the common database 410 in the server 400. More specifically the registered pieces of information are those required for the use of each device via the network 500 and include the name of each device, the name of the category to which each device belongs to (that is, the device class), and the function of each device, and the position of each device. When each device is connected to a computer on the network 500, these pieces of information are registered into the common database 410 in the server 400 according to a predetermined format by the computer.

Pieces of information regarding individuals utilizing the network 500 are also registered in the common database 410. The registered pieces of information include the name, the identification number, the post, and the location of each person. The manager of the network 500 registers these pieces of information according to a predetermined format into the common database 410 by means of the computer for the manager. In some occasions, each individual or any representative may perform the registration instead.

The server 400 opens all the pieces of information with regard to the respective devices and individuals registered in the common database 410 to the public on the network 500. The computer 100 and any other computer present on the network 500 is thus able to freely obtain and utilize the registered pieces of information regarding the devices and individuals. Some restriction may be imposed on the opening, for example, to allow only specific computers on the network 500 to access the information.

A directory service, for example, used in Windows NT, which is a network operating system manufactured by Microsoft Corporation, may be utilized to open the information to the public on the network 500 and allow access from any computer present on the network 500. In the case where the server 400 functions as a domain controller, the directory service enables any computer present on the network 500 to refer to the information stored in the common database 410.

In the structure of this embodiment, the devices-related information and the individuals-related information are registered in the specific computer or the server 400. The technique of the present invention is, however, not restricted to this structure. As long as the information can be made open to the public on the network 500, these pieces of information may be registered in any of the computers 100, 200, and 300 present on the network 500 or even another computer. For the purpose of the enhanced working speed, all or part of the information regarding the devices and individuals may be copied from the common database 410 in the server 400 to the own hard disk unit 140 of the computer 100, which functions as the device retrieving apparatus and utilizes the information.

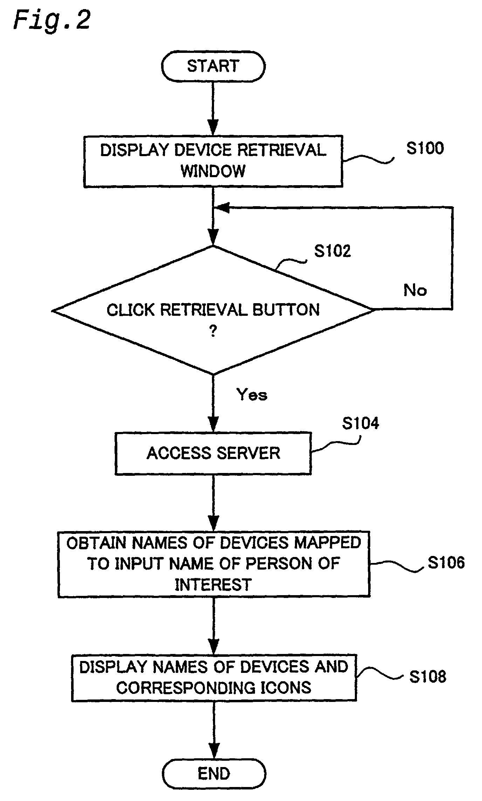

A first device retrieval and display process carried out in this embodiment is described with Figs. 2 through 5. It is here assumed that the user of the computer 100 retrieves output devices located near to a certain person who utilizes the network 500, in order to transfer an image to the certain person. In the description below, the person who is the object of the device retrieval is called the person of interest.

Fig. 2 is a flowchart showing a routine of the first device retrieval and display process executed by the application unit 112 of Fig. 1.

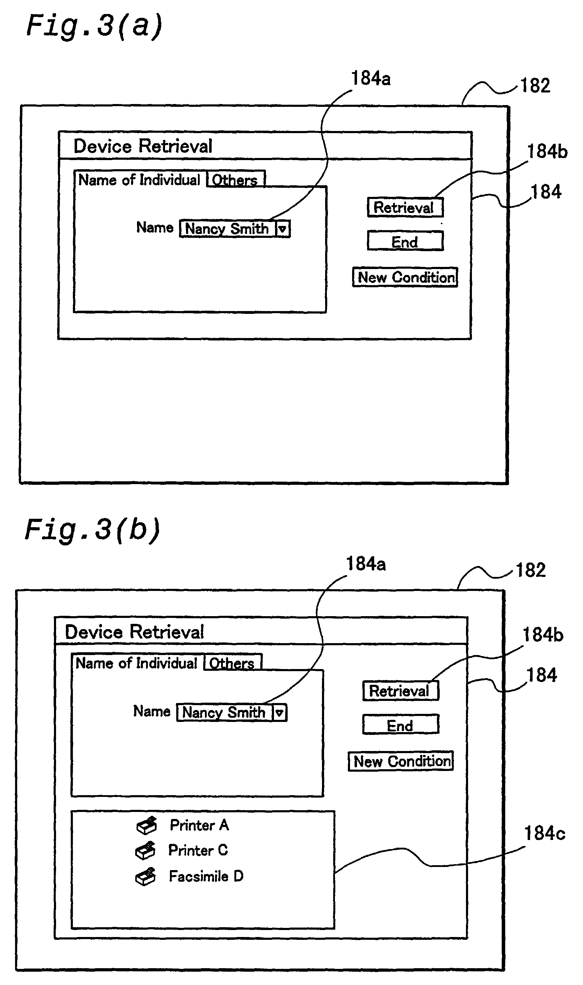

When the user gives an instruction, for example, through operations of the mouse 170b, to the computer 100 to start the device retrieval process, the program enters the first device retrieval and display routine shown in Fig. 2. The application unit 112 in the computer 100 causes a Device Retrieval window 184 as shown in Fig. 3(a) to be displayed on a screen 182 of the monitor 180 (step S100).

Fig. 3 shows the Device Retrieval window displayed on the screen of the monitor 180 of Fig. 1.

The user inputs the name of the person of interest, who is the object of the device retrieval, into a name input box 184a in the displayed Device Retrieval window 184, for example, through operations of the keyboard 170a. In the example of Fig. 3, the person of interest is Nancy Smith, and the name Nancy Smith is input in the name input box 184a. The user checks the input name for any misspelling or mistake and clicks a Retrieval button 184b in the Device Retrieval window 184 with the mouse 170b.

After the display of the Device Retrieval window 184, the application unit 112 waits for a click of the Retrieval button 184b (step S102). In response to a user's click of the Retrieval button 184b, the application unit 112 gains access to the server 400 connecting with the network 500 via the I/O unit 130 and the communication unit 150 (step S104), and obtains the names of all the devices mapped to the input name of the person of interest in the name input box 184a among the pieces of information registered in the common database 410 in the server 400 (step S106), and stores the obtained names of the devices into the hard disk unit 140 via the I/O unit 130.

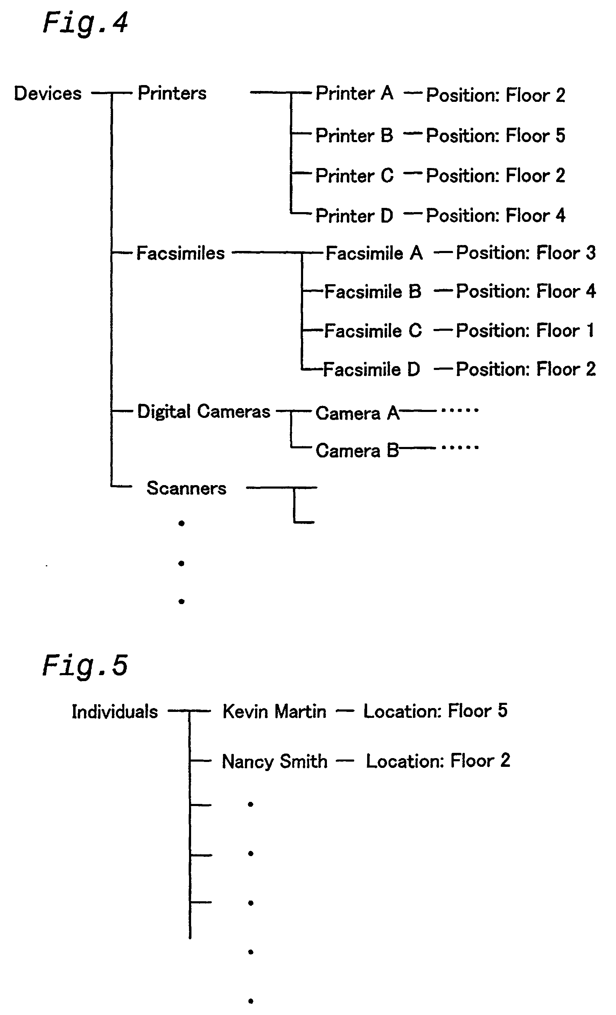

Fig. 4 shows an example of the information with regard to devices registered in the common database 410 of Fig. 1. Fig. 5 shows an example of the information with regard to individuals registered in the common database 410.

As described previously, the pieces of information regarding the respective devices present on the network 500 are registered in the common database 410, for example, in a tree structure as shown in Fig. 4. The first layer of this tree structure stores the information regarding the names of the categories to which the respective devices belong (that is, the device classes). In a concrete example, when the categories of the respective devices present on the network 500 include the printer, the facsimile, the digital camera, and the canner, these names are registered in the first layer.

The second layer stores the information regarding the names of the individual devices present on the network 500. In a concrete example, when the individual devices present on the network 500 include Printers A, B, ... and Facsimiles A, B, ..., these names are registered in the second layer.

The third layer stores the information regarding the positions of the individual devices present on the network 500. In a concrete example, the information includes the floors or the names or allocation numbers of the sections where the respective devices are located.

The unit of the position is not restricted to the floor or the section, but the position may be expressed by a greater-scaled unit like a building or an office or by a smaller-scaled unit. With regard to portable devices like digital cameras, the places where these devices are generally found may be set to the positions as a matter of convenience. The other pieces of the devices -related information, for example, the functions of the respective devices, are omitted from the illustration of Fig. 4.

As described previously, the pieces of information regarding the individuals who utilize the network 500 are also registered in the common database 410, for example, in a tree structure as shown in Fig. 5. The first layer stores the information regarding the names of the individuals who utilize the network 500 like Kevin Martin and Nancy Smith.

The identification numbers, the posts, and other data of the individuals are also registered as the individuals-related information, although these are omitted from the illustration of Fig. 5.

The application unit 112 gains access to the common database 410 and retrieves the name that is coincident with the input name of the person of interest in the name input box 184a from the first-layer information on the names among the individuals-related information. When there is a coincident name, the application unit 112 obtains the second-layer information with regard to the location mapped to the coincident name. In the example of Fig. 3(a), the name input in the name input box 184a is Nancy Smith. The application unit 112 accordingly retrieves the name Nancy Smith from the information shown in Fig. 5 and obtains the information with regard to the location Floor 2 mapped to the name.

The application unit 112 subsequently retrieves the position that is coincident with the obtained location from the third-layer information on the positions among the devices-related information. When there is a coincident position, the application unit 112 obtains the second-layer information with regard to the names of the devices mapped to the coincident position. In the example of Fig. 5, the obtained location is Floor 2. The application unit 112 accordingly retrieves the position Floor 2 from the information shown in Fig. 4 and obtains the information with regard to the names of the devices Printer A, Printer C, and Facsimile D mapped to the position.

After obtaining the names of the devices, the application unit 112 causes the obtained names of the respective devices and icons corresponding to the names of the devices to be displayed on the screen 182 of the monitor 180 via the I/O unit 130 (step S108). In a concrete example, a Retrieval Results display box 184c is newly open in the Device Retrieval window 184, and the obtained names of the devices, that is, Printer A, Printer C, and Facsimile D, and corresponding icons are displayed in the display box 184c as shown in Fig. 3(b). Data of the icons corresponding to the respective devices may be stored in advance in the hard disk unit 140 of the computer 100 or may alternatively be obtained from the common database 410 when the computer 100 accesses the server 400.

As described above, according to the first device retrieval and display process shown in the flowchart of Fig. 2, the user of the computer 100 can retrieve output devices that are located near to the person of interest among all the devices present on the network by simply inputting the name of the person of interest, who is the object of the device retrieval. The user selects a desired device out of the output devices obtained as the results of retrieval and transfers image data to the selected device. This arrangement enables an image to be sent to the person of interest without delay.

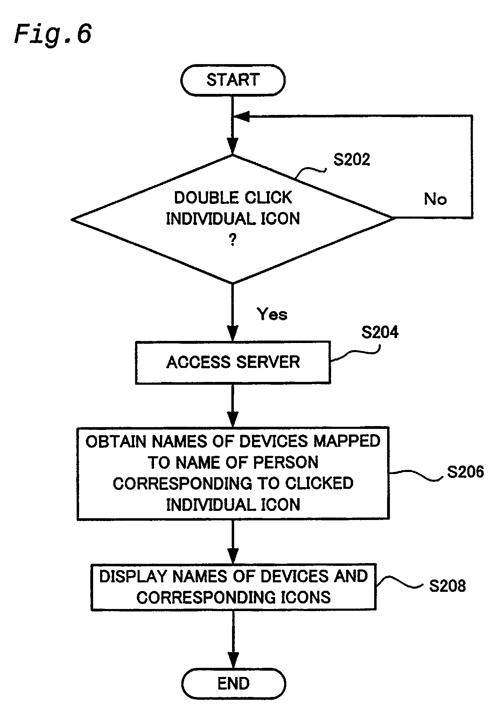

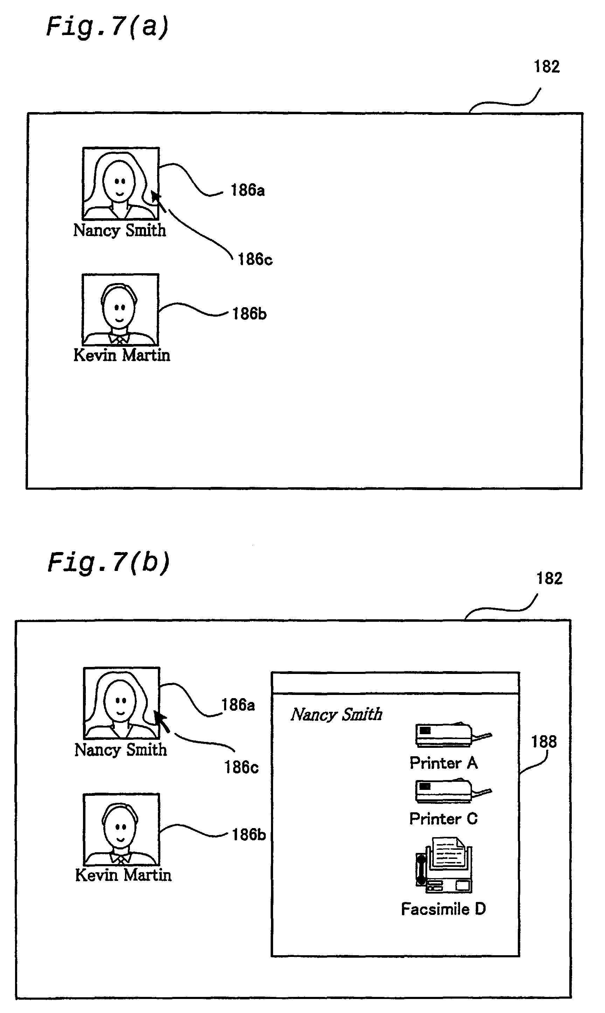

A second device retrieval and display process carried out in this embodiment is described below with Figs. 6 and 7.

Fig. 6 is a flowchart showing a second device retrieval and display process routine executed by the application unit 112 of Fig. 1. Fig. 7 shows individual icons displayed on the screen of the monitor 180 of Fig. 1.

It is here assumed that two individual icons 186a and 186b are displayed on the screen 182 of the monitor 180 connecting with the computer 100 as shown in Fig. 7(a). The individual icons 186a and 186b are respectively related to a person Nancy Smith and another person Kevin Martin. Each individual icon includes the name of the corresponding person and a photographic image of the person.

In order to retrieve the output devices located near to a desired person of interest, the user of the computer 100 operates the mouse 170b and double clicks the individual icon related to the person of interest out of the individual icons displayed on the screen 182. In the example of Fig. 7, the person of interest is Nancy Smith, and the user selects and double clicks the individual icon 186a corresponding to Nancy Smith with a mouse cursor 186c.

The application unit 112 detects the double-click of the individual icon 186a corresponding to Nancy Smith via the I/O unit 130 (step S202) and finds that the name of the person of interest, who is the object of the device retrieval, is Nancy Smith. The application unit 112 then gains access to the server 400 connecting with the network 500 via the I/O unit 130 and the communication unit 150 (step S204), obtains the names of all the devices mapped to the name of the person of interest among the pieces of information registered in the common database 410 in the server 400 (step S206), and stores the obtained names of the devices into the hard disk unit 140 via the I/O unit 130.

The method of obtaining the names of the devices mapped to the name of the person of interest from the information registered in the common database 410 is identical with the method discussed previously in the first device retrieval and display process of Fig. 2 and is not specifically described here.

After obtaining the names of the devices mapped to the name of the person of interest, the application unit 112 causes the obtained names of the respective devices and icons corresponding to the names of the devices to be displayed on the screen 182 of the monitor 180 via the I/O unit 130 (step S208). In a concrete example, an Individual window 188 corresponding to the person of interest Nancy Smith is newly open on the screen 182, and the obtained names of the devices and corresponding icons are displayed in the window 188 as shown in Fig. 7(b). As in the case of Fig. 3(b), the obtained names of the devices are Printer A, Printer C, and Facsimile D in the example of Fig. 7(b).

As described above, according to the second device retrieval and display process shown in the flowchart of Fig. 6, the user of the computer 100 can retrieve output devices that are located near to the person of interest among all the devices present on the network by simply double clicking the ion of the person of interest, who is the object of the device retrieval. Compared with the first device retrieval and display process described previously, this arrangement saves the labor of inputting the name of the person of interest, thus enhancing the operatability of the user.

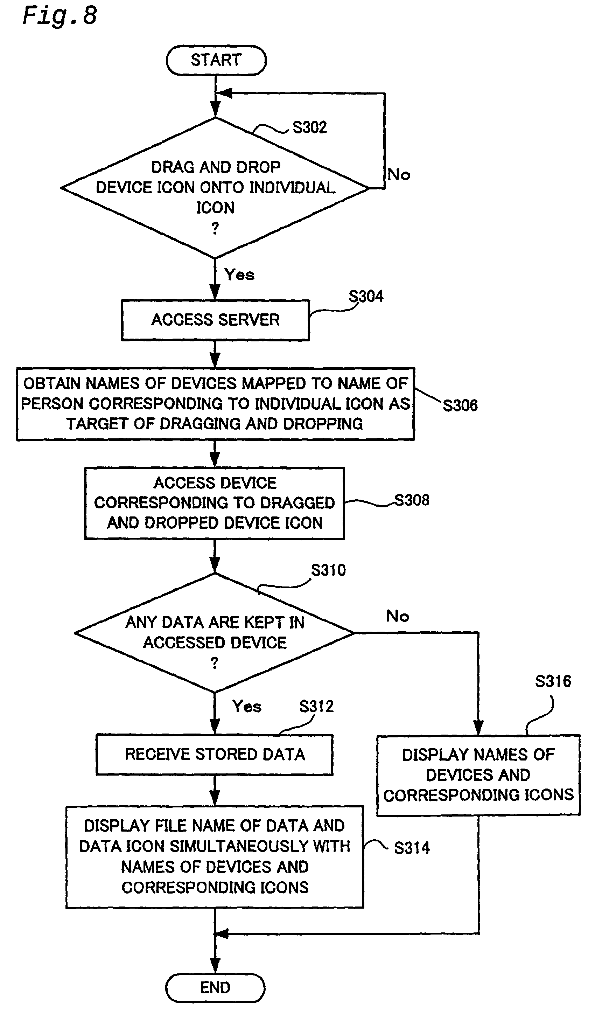

A third device retrieval and display process carried out in this embodiment is described below with Figs. 8 through 10.

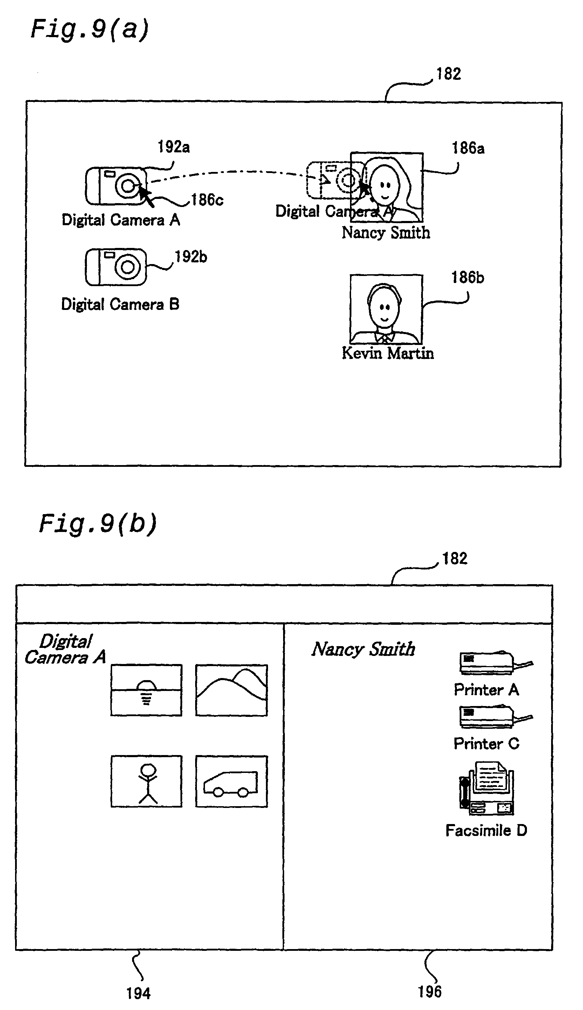

Fig. 8 is a flowchart showing a third device retrieval and display process routine executed by the application unit 112 of Fig. 1. Fig. 9 shows individual icons displayed on the screen of the monitor 180 of Fig. 1.

It is here assumed that two device icons 192a and 192b and two individual icons 186a and 186b are displayed on the screen 182 of the monitor 180 connecting with the computer 100 as shown in Fig. 9(a). The device icons 192a and 192b are respectively related to Digital Camera A and Digital Camera B as input devices. The individual icons 186a and 186b are respectively related to the individuals Nancy Smith and Kevin Martin as in the case of Fig. 7.

In order to transfer an image from a desired digital camera s the input device to an output device that is located near to a desired person of interest, the user of the computer 100 operates the mouse 170b and drags and drops the icon of the desired digital camera displayed on the screen 182 onto the individual icon corresponding to the desired person of interest. In the example of Fig. 9(a), the desired digital camera is Digital Camera A, and the desired person of interest is Nancy Smith. The user selects the icon 192a corresponding to Digital Camera A with the mouse cursor 186c, drags the selected icon 192a as shown by the arrow of the one-dot chain line, and drops the dragged icon 192a onto the individual icon corresponding to Nancy Smith.

In the description below, the device corresponding to the dragged and dropped device icon (that is, Digital Camera A) is called the device of interest.

The application unit 112 detects via the I/O unit 130 that the icon 192a corresponding to Printer A has been dragged and dropped onto the individual icon 186a corresponding to Nancy Smith (step S302) and finds that the name of the digital camera, which is the source of transfer, is Digital Camera A and that the name of the person of interest, who is the object of the device retrieval, is Nancy Smith. The application unit 112 then gains access to the server 400 connecting with the network 500 via the I/O unit 130 and the communication unit 150 (step S304), obtains the names of all the devices mapped to the name of the person of interest among the pieces of information registered in the common database 410 in the server 400 (step S306), and stores the obtained names of the devices into the bard disk unit 140 via the I/O unit 130.

The method of obtaining the names of the devices mapped to the name of the person of interest from the information registered in the common database 410 is identical with the method discussed previously in the first device retrieval and display process of Fig. 2 and is not specifically described here.

The application unit 112 subsequently gains access Digital Camera A as the device of interest present on the network 500 via the I/O unit 130 and the communication unit 150 (step S308) and determines whether or not Digital Camera A stores any data (step S310). In the case where Digital Camera A stores any data, the application unit 112 reads the data from Digital Camera A (step S312) and stores the obtained data into the hard disk unit 140.

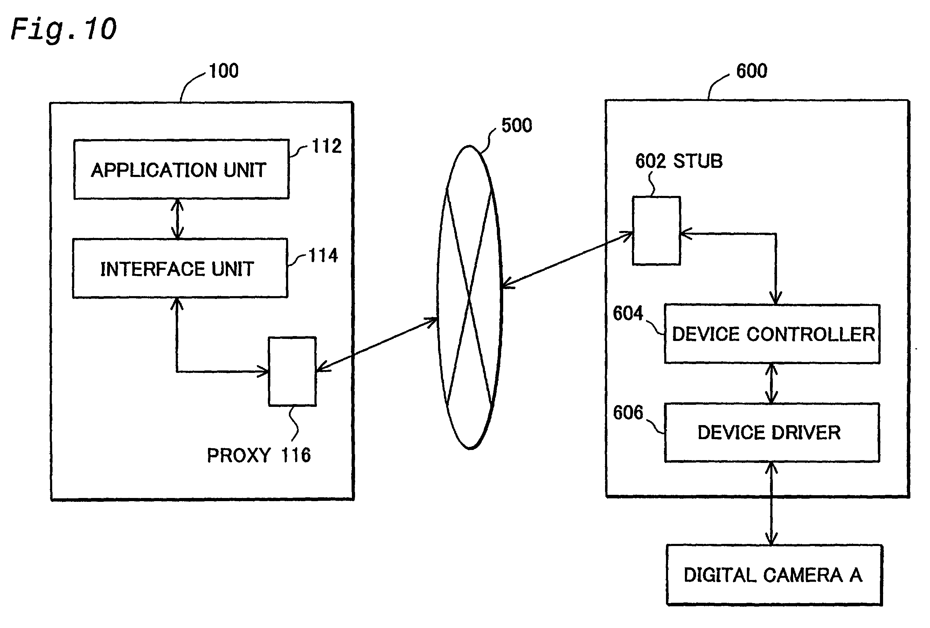

The series of processing executed by the application unit 112 to access Digital Camera A as the device of interest and obtain data is described with Fig. 10.

Fig. 10 is a block diagram showing the series of processing executed by the application unit 112 of Fig. 1 to access a device and obtain data via the network 500.

When the user drags and drops the icon 192a of Digital Camera A, an interface unit 114 and a proxy 116 corresponding to Digital Camera A are generated in the computer 100. In response to generation of the proxy 116, a stub 602 is generated in the computer 600 to which Digital Camera A is connected.

The CPU 110 of the computer 100 gives an instruction via the network 500 to the computer 600 to generate a device controller 604 corresponding to Digital Camera A. The device controller 604 corresponding to Digital Camera A is then generated in the computer 600.

A device driver 606 corresponding to Digital Camera A has been generated in the computer 600 when Digital Camera A is connected to the computer 600.

In this embodiment, the interface unit 114, the device controller 604, the proxy 116, and the stub 602 are actualized by the COM-based technologies.

COM (Component Object Model) is an infrastructure developed and proposed by Microsoft Corporation to provide a framework for integrating objects. COM defines a method of building dynamically replaceable components and specifies the standard of the component architecture.

In the COM-based technologies, each service provided by the software is implemented as a COM object. Each COM object defines at least one interface. In this embodiment, the interface unit 114 and the device controller 604 are built as COM objects.

The proxy 116 and the stub 602 are, on the other hand, built by the mechanism of COM/DCOM (distributed COM). COM/DCOM is a mechanism generally supported by, for example, the Windows platform.

The interface defined by the COM object generally includes a plurality of methods having some relations with each other. Each interface is identified by an interface ID. The method is a function call for executing a specific function. A pointer to a specific interface is required to call a method included in the specific interface. The pointer to the specific interface is obtained by specifying the interface ID for identifying the specific interface and a class ID for identifying a COM object, which defines the specific interface, and by calling a COM library service.

The interface unit 114 and the proxy 116 generated in the computer 100 and the stub 602 and the device controller 604 generated in the computer 600 connecting with Digital Camera A as described above are automatically activated. This results in mutual connection of the application unit 112, the interface unit 114, and the proxy 116 in the computer 100, the network 500, the stub 602, the device controller 204, and the device driver 606 in the computer 600, and Digital Camera A linked with the computer 600 as shown in Fig. 10. A communication path is accordingly established from the application unit 112 via the network 500 to Digital Camera A as a device. This allows the application unit 112 to freely control and utilize Digital Camera A via the network 500.

The proxy 116 and the stub 602 perform abstraction of the communication path that connects the computer 100 with the computer 600 via the network 500, relative to the upper-level application unit 112 and interface unit 114, when the application unit 112 transmits a diversity of control information and data to and from Digital Camera A across the network 500. The device controller 604, on the other hand, absorbs the difference in device class (type of the device) of the corresponding device (in this case, Digital Camera A) and performs abstraction of the device (abstraction of the hardware) relative to the application unit 112 and the interface unit 114 located on the upper level.

In the above manner, the application unit 112 obtains data kept in Digital Camera A via the network 500 and stores the obtained data into the hard disk unit 140. The application unit 112 subsequently reads out the stored data and carries out a skipping process to generate data of thumbnail images. The application unit 112 then causes data icons to be displayed on the screen 182 of the monitor 180 based on the generated data of the thumbnail images, simultaneously with display of the names of the respective devices obtained at step S306 and icons corresponding to the names of the devices as shown in Fig. 9(b) (step S314).

In accordance with a concrete procedure, the application unit 112 opens both a Device window 194 corresponding to Digital Camera A and an Individual window 196 corresponding to Nancy Smith on the screen 182 of the monitor 180 as shown in Fig. 9(b). Data icons of all the data kept in Digital Camera A are displayed in the Device window 194 of Digital Camera A, while the names of the devices obtained in the process of the device retrieval and icons corresponding to the names of the devices are displayed in the Individual window 196 of Nancy Smith. As in the case of Figs. 3(b) and 7(b), the obtained names of the devices are Printer A, Printer C, and Facsimile D in the example of Fig. 9(b).

When it is determined at step S310 that no data are kept in Digital Camera A, on the other hand, the application unit 112 newly opens only the Individual window 188 corresponding to the person of interest Nancy Smith on the screen 182 of the monitor 180, and causes the obtained names of the devices and icons corresponding to the names of the devices to be displayed in the window 188 as shown in Fig. 7(b) (step S316).

As described above, according to the third device retrieval and display process shown in the flowchart of Fig. 8, the user of the computer 100 can cause data kept in the digital camera and the output devices located near to the person of interest to be displayed simultaneously on the screen by simply dragging and dropping the icon representing the digital camera as the source of transfer onto the icon representing the person of interest as the destination of transfer. This arrangement enables the user to check available images for transfer and output devices as the possible destination of transfer at a glance. The user selects a desired image and a desired output device among these options and drags and drops the data icon of the selected image onto the icon of the selected output device, in order to give an immediate instruction to the computer 100 to transfer data of the desired image from Digital Camera A to the selected output device.

The present invention is not restricted to the above embodiment or its modifications, but there may be many other modifications, changes, and alterations without departing from the scope or spirit of the main characteristics of the present invention.

In the example of Fig. 9, Digital Camera A connecting with another computer 600 is specified as the source of data transfer. The technique of the present invention is, however, not restricted to this arrangement. The source of transfer may be an input device (not shown) locally connecting with the user's own computer 100. The data to be transferred may be those stored in the hard disk unit 140 of the user's own computer 100 or those in a Web site present on the network 500.

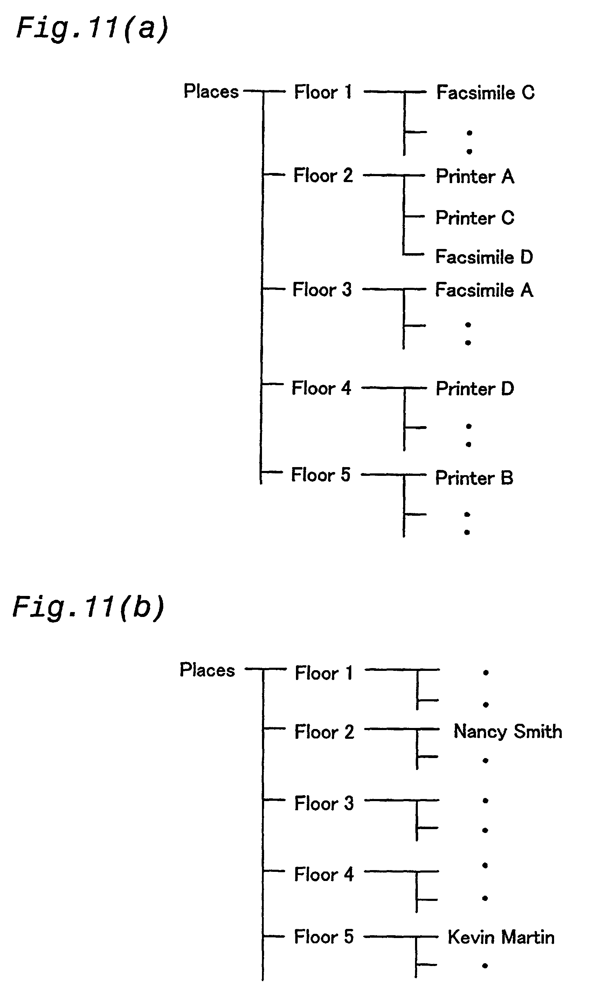

In the embodiment discussed above, the information on the positions of the respective devices and the information on the locations of the respective individuals are registered in the common database 410 in the server 400 as one piece of the devices-related information and one piece of the individuals-related information, respectively. The technique of the present invention is, however, not restricted to this arrangement. Another possible application provides places-related information as a new information category in the common database 410 as shown in Fig. 11. The places-related information may include information with regard to the positions of the respective devices and information with regard to the locations of the respective individuals.

Fig. 11 shows an example of places-related information stored in the common database 410 of Fig. 1. The arrangement of storing the places-related information in a tree structure in the common database 410 and totally managing the positions of the respective devices and the locations of the respective individuals as shown in Fig. 11 enhances the speed of retrieval in the database. Application of such information for the device retrieval process discussed above enhances the efficiency of device retrieval.

In the embodiment discussed above, the devices obtained as the results of device retrieval are output devices. According to the requirements, however, input devices may be obtained as the results of device retrieval.

In the embodiment discussed above, the individuals are mapped to the devices via the places-related information like the positions of the devices and the locations of the individuals. The mapping may, however, be implemented via other pieces of information, for example, information regarding the possession of the respective devices or information regarding the use of the respective devices.

In the embodiment discussed above, the interface unit 114, the device controller 604, the proxy 116, and the stub 602 are actualized by the COM-based technologies. Similar mechanisms may, however, be actualized by utilizing any specification of building similar discrete objects other than COM, for example, JAVA or CORBA.

The display of icons may be replaced with the display of only series of characters or letters representing the individual names, the device names, and the data names or with the display of figures, symbols, codes, or colors corresponding to these names.

In the embodiment discussed above, the icons are displayed in alignment in the window on the screen 182 of the monitor 180. The icons may alternatively be displayed in a tree structure in the window.

### Industrial Applicability

The technique of the present invention is applicable to a diversity of computers connecting with a network as well as computer-readable recording media used by such computers.

## Claims

1. A device retrieving apparatus that retrieves a device mapped to a desired person among a plurality of devices present on a network,
said device retrieving apparatus comprising:
a display unit having a screen;
an input unit that is used to externally input an instruction; and
a control unit,
said control unit, when an individual description of the desired person is externally input as a specific individual description via said input unit, gaining access to a database that is present on the network or in said device retrieving apparatus, obtaining a device description mapped to the input specific individual description out of mapping information, which is stored in said database and regards mapping of a plurality of individual descriptions to device descriptions expressing said plurality of devices present on the network, and causing at least one of the obtained device description and a device symbol representing a device expressed by the obtained device description to be displayed on the screen of said display unit.

2. A device retrieving apparatus that retrieves a device mapped to a desired person among a plurality of devices present on a network,
said device retrieving apparatus comprising:
a display unit having a screen;
an input unit that is used to externally input an instruction; and
a control unit,
said control unit causing individual symbols corresponding to individuals to be displayed on the screen of said display unit,
said control unit, when an instruction is given externally via said input unit to select a specific individual symbol corresponding to the desired person among the individual symbols displayed on the screen, specifying an individual description of the desired person corresponding to the selected specific individual symbol as a specific individual description, gaining access to a database that is present on the network or in said device retrieving apparatus, obtaining a device description mapped to the specific individual description out of mapping information, which is stored in said database and regards mapping of a plurality of individual descriptions to device descriptions expressing said plurality of devices present on the network, and causing at least one of the obtained device description and a device symbol representing a device expressed by the obtained device description to be displayed on the screen of said display unit.

3. A device retrieving apparatus that retrieves a device mapped to a desired person among a plurality of devices present on a network,
said device retrieving apparatus comprising:
a display unit having a screen;
an input unit that is used to externally input an instruction; and
a control unit,
said control unit causing individual symbols corresponding to individuals and device symbols corresponding to devices to be displayed on the screen of said display unit,
said control unit, when an instruction is given externally via said input unit to map a desired first device symbol among the device symbols displayed on the screen to a specific individual symbol corresponding to the desired person, specifying an individual description of the desired person corresponding to the mapped individual symbol as a specific individual description, gaining access to a database that is present on the network or in said device retrieving apparatus, obtaining a device description mapped to the specific individual description out of mapping information, which is stored in said database and regards mapping of a plurality of individual descriptions to device descriptions expressing said plurality of devices present on the network, and causing at least one of the obtained device description and a second device symbol representing a device expressed by the obtained device description to be displayed on the screen of said display unit.

4. A device retrieving apparatus in accordance with claim 3, wherein said control unit, in the case where a device represented by the first device symbol keeps data, causes data symbols representing respective data kept in the device to be displayed in a specific area on the screen of said display unit, which is different from an area in which at least one of the obtained device description and the corresponding second device symbol is displayed.

5. A device retrieving apparatus in accordance with any one of claims 1 through 4, wherein the mapping information includes individual positions-related information with regard to mapping of positions related to individuals to the individual descriptions and device positions-related information with regard to mapping of positions related to devices to the device descriptions, and
said control unit specifies a position mapped to the specific individual description from the individual positions-related information, reads a device description mapped to the specified position out of the device positions-related information, and obtains the read-out device description as the device description mapped to the specific individual description.

6. A method of retrieving a device mapped to a desired person among a plurality of devices present on a network and displaying a result of retrieval on a screen of a display unit,
said method comprising the steps of:
(a) specifying an individual description of the desired person;
(b) obtaining a device description mapped to the specified individual description out of mapping information, which is provided in advance and regards mapping of a plurality of individual descriptions to device descriptions expressing said plurality of devices present on the network; and
(c) causing at least one of the obtained device description and a device symbol representing a device expressed by the obtained device description to be displayed on the screen of said display unit.

7. A method of retrieving a device mapped to a desired person among a plurality of devices present on a network and displaying a result of retrieval on a screen of a display unit,
said method comprising the steps of:
(a) causing individual symbols corresponding to individuals to be displayed on the screen of said display unit;
(b) selecting a specific individual symbol corresponding to the desired person among the individual symbols displayed;
(c) obtaining a device description mapped to an individual description of the desired person corresponding to the selected specific individual symbol out of mapping information, which is provided in advance and regards mapping of a plurality of individual descriptions to device descriptions expressing said plurality of devices present on the network; and
(d) causing at least one of the obtained device description and a device symbol representing a device expressed by the obtained device description to be displayed on the screen of said display unit.

8. A method of retrieving a device mapped to a desired person among a plurality of devices present on a network and displaying a result of retrieval on a screen of a display unit,
said method comprising the steps of:
(a) causing individual symbols corresponding to individuals and device symbols corresponding to devices to be displayed on the screen of said display unit;
(b) mapping a desired device symbol among the device symbols displayed to a specific individual symbol corresponding to the desired person;
(c) obtaining a device description mapped to an individual description of the desired person corresponding to the mapped specific individual symbol out of mapping information, which is provided in advance and regards mapping of a plurality of individual descriptions to device descriptions expressing said plurality of devices present on the network; and
(d) causing at least one of the obtained device description and a device symbol representing a device expressed by the obtained device description to be displayed on the screen of said display unit.

9. A computer readable recording medium in which a specific computer program is recorded, said specific computer program being used to retrieve a device mapped to a desired person among a plurality of devices present on a network and display a result of retrieval on a screen of a display unit connecting with a computer,
said specific computer program causing the computer to attain the functions of:
when an individual description of the desired person is externally input into the computer, obtaining a device description mapped to the input individual description out of mapping information, which is provided in advance and regards mapping of a plurality of individual descriptions to device descriptions expressing said plurality of devices present on the network; and
causing at least one of the obtained device description and a device symbol representing a device expressed by the obtained device description to be displayed on the screen of said display unit.

10. A computer readable recording medium in which a specific computer program is recorded, said specific computer program being used to retrieve a device mapped to a desired person among a plurality of devices present on a network and display a result of retrieval on a screen of a display unit connecting with a computer,
said specific computer program causing the computer to attain the functions of:
causing individual symbols corresponding to individuals to be displayed on the screen of said display unit;
when an instruction is given externally to the computer to select a specific individual symbol corresponding to the desired person among the individual symbols displayed on the screen, obtaining a device description mapped to an individual description of the desired person corresponding to the selected specific individual symbol out of mapping information, which is provided in advance and regards mapping of a plurality of individual descriptions to device descriptions expressing said plurality of devices present on the network; and
causing at least one of the obtained device description and a device symbol representing a device expressed by the obtained device description to be displayed on the screen of said display unit.

11. A computer readable recording medium in which a specific computer program is recorded, said specific computer program being used to retrieve a device mapped to a desired person among a plurality of devices present on a network and display a result of retrieval on a screen of a display unit connecting with a computer,
said specific computer program causing the computer to attain the functions of:
causing individual symbols corresponding to individuals and device symbols corresponding to devices to be displayed on the screen of said display unit;
when an instruction is given externally to the computer to map a desired device symbol among the device symbols displayed on the screen to a specific individual symbol corresponding to the desired person, obtaining a device description mapped to an individual description of the desired person corresponding to the mapped specific individual symbol out of mapping information, which is provided in advance and regards mapping of a plurality of individual descriptions to device descriptions expressing said plurality of devices present on the network; and
causing at least one of the obtained device description and a device symbol representing a device expressed by the obtained device description to be displayed on the screen of said display unit.
